# EUROPÄISCHE PATENTSCHRIFT

(11) **EP 0 813 766 B1**
(45) Veröffentlichungstag und Bekanntmachung des Hinweises auf die Patenterteilung: **11.11.1998**
(21) Anmeldenummer: 96905847.8
(22) Anmeldetag: 01.03.1996
(51) Int. Cl.: H02G 5/00

(54) **ANSCHLUSSKLEMME FÜR EINE STROMSAMMELSCHIENE EINES STROMSAMMELSCHIENENSYSTEMS**
CONNECTING TERMINAL FOR A BUSBAR IN A BUSBAR SYSTEM
BORNE POUR UNE BARRE OMNIBUS D'UN JEU DE BARRES OMNIBUS

(30) Priorität: 10.03.1995 DE 19508515
(43) Veröffentlichungstag der Anmeldung: 29.12.1997
(73) Patentinhaber: Rittal-Werk Rudolf Loh GmbH & Co. KG, 35745 Herborn (DE)
(72) Erfinder: WAGENER, Hans, D-35716 Dietzhölztal (DE)
(74) Vertreter: Fleck, Hermann-Josef, Dr.-Ing.
(86) Internationale Anmeldenummer: EP9600867
(87) Internationale Veröffentlichungsnummer: WO9628870

(56) Entgegenhaltungen:
- DE-A- 1 910 649
- DE-A- 3 921 665
- DE-C- 4 235 444

## Beschreibung

Die Erfindung betrifft eine Anschlußklemme für eine Stromsammelschiene eines Stromsammelschienensystems gemäß dem Oberbegrift des Anspruchs 1 (Vgl. DE-C 42 35 444).

Stromsammelschienen für große Ströme benötigen einen großen Querschnitt, der das Anbringen von abzweigenden Leitungen erschwert. Um dies zu erleichtern, sind schon n-eckige Stromsammelschienen in Erwägung gezogen werden, die in ihren Außenseiten längsgerichtete, hinterschnittene Aufnahmenuten tragen.

Es ist Aufgabe der Erfindung, eine Anschlußklemme der eingangs erwähnten Art zu schaffen, die aus einfachen Teilen besteht, leicht an einer derartigen Stromsammelschiene angebracht werden kann und außerdem eine eindeutige Verbindung des anzuschließenden Leiters mit der Stromsammelschiene bringt.

Diese Aufgabe wird nach der Erfindung durch die Merkmale des Anspruchs 1.

Die beiden Klemmenteile werden von beiden Seiten her an die Stromsammelschiene herangebracht und mit ihren Halteelementen in Aufnahmen derselben eingeführt und quer zur Stromsammelschiene gehalten. Sind die beiden Klemmenteile miteinander verbunden, bilden sie eine Einheit, die an der Stromsammelschiene unverlierbar gehalten und allenfalls in deren Längsrichtung noch verschoben werden kann. Mit Hilfe der Klemmstücke und dem Klemmschrauben wird der anzuschließende Leiter, z.B. ein Einspeiseleiter großen Querschnitts festgeklemmt und mit der Stromsammelschiene verspannt, wobei je nach Einsatz von einem oder zwei Klemmstücken der Leiter direkt oder über ein Klemmstück mit der Außenseite der Stromsammelschiene verbunden wird. Sind die Klemmschrauben festgezogen, dann ist auch die Anschlußklemme axial unverschiebbar an der Stromsammelschiene festgelegt.

Das Einführen der Halteelement der Klemmenteile in die hinterschnittenen Aufnahmen der Stromsammelschiene wird nach einer Ausgestaltung dadurch erleichtert, daß die Aufnahmenuten als T-Nuten ausgebildet sind und daß die Klemmenteile Halteelemente tragen, die nur der belegten Außenseite der Stromsammelschiene zugekehrt die T-Nut hintergreifende Halteansätze aufweisen.

Dabei kann bei entsprechender Auslegung die Einführung auch quer zur Stromsammelschiene erfolgen, wenn zwischen der Aufnahme und dem Halteelement ein entsprechendes Querspiel vorhanden ist.

Die Verbindung der Klemmenteile wird auf einfachste Weise dadurch erreicht, daß die Klemmenteile im Bereich ihrer Verbindungsebene mittels T-förmiger oder schwalbenschwanzförmiger Verbindungselemente miteinander verbindbar sind, wobei die Verbindungsrichtung parallel zur Längsachse der Stromsammelschiene verläuft. Dies kann durch entsprechende gegeneinander gerichtete Verstellung der Klemmenteile auf der Stromsammelschiene erfolgen.

Nach einer Ausgestaltung ist vorgesehen, daß die Klemmenteile im wesentlichen spiegelbildlich ausgebildet sind und im Verbindungsbereich lediglich die aufeinander abgestimmten Verbindungselemente tragen.

Damit die Außenseite der Stromsammelschiene für die Verbindung mit einem Klemmstück oder dem anzuschließenden Leiter gut zugänglich ist, wird nach einer Ausgestaltung vorgesehen, daß die Klemmenkammer der Stromsammelschiene zugekehrt bündig mit der Außenseite der Stromsammelschiene abschließende Seiten aufweist oder daß die Stromsammelschiene mit der Außenseite in die Klemmenkammer ragt.

Ist nach einer weiteren Ausgestaltung vorgesehen, daß die Klemmenkammer durch seitliche Schenkel der Klemmenteile begrenzt ist, und daß in die einander zugekehrten Innenseiten dieser Schenkel senkrecht zur Außenseite gerichtete Führungsnuten für Führungsansätze der einsetzbaren Klemmstücke eingebracht sind, dann sind die Klemmstücke in den Klemmenteilen geführt und gehalten.

Das Einbringen der Klemmstücke in die Klemmkammer wird dadurch erleichtert, daß die Stege der Klemmenteile als getrennte Teile ausgebildet sind, die mit den Klemmenteilen verbindbar sind.

Ist dabei die Ausgestaltung so, daß die Stege beider Klemmenteile zu einem einzigen Stegteil zusammengefaßt sind, das auch die Klemmenteile miteinander verbindet, dann übernimmt dieses Stegteil auch die Verbindung der Klemmenteile, die dann identisch ausgelegt sein können.

Die Bemessung der Klemmstücke kann so vorgenommen werden, daß die in die Klemmenkammer eingesetzten Klemmstücke auf die Breite der Klemmenkammer abgestimmt sind, wobei sie sich in der Tiefe über nur ein Klemmenteil oder über beide Klemmenteile erstrecken.

Die Klemmenteile können auch aus elektrisch leitendem Material bestehen und direkt zur elektrischen Verbindung zwischen Stromsammelschiene und anzuschließendem Leiter beitragen.

Die Verbindungsfläche zwischen den beiden Teilen läßt sich dadurch vergrößern, daß die an der Stromsammelschiene der Klemmenkammer zugekehrte Außenseite geschlossen ist.

Das Festklemmen unterschiedlicher, abzweigender Leiter in der Anschlußklemme wird dadurch erleichtert und verbessert, daß die Klemmstücke mit Ausnehmungen versehen sind, die an den (die) Querschnitt(e) des (der) abzweigenden Leiters (Leiter) angepaßt sind.

Die Erfindung wird anhand von in den Zeichnungen dargestellten Ausführungsbeispielen näher erläutert. Es zeigen:
- Fig. 1: in Axialrichtung der Stromsammelschiene gesehen eine aufgesetzte Anschlußklemme
- Fig. 2: die aufgesetzte Anschlußklemme in Seitenansicht II nach Fig. 1,
- Fig. 3: Ausführungsbeispiele für in die Anschlußklemme einsetzbare Klemmstücke,
- Fig. 4: der Fig. 2 entsprechend eine Anschlußklemme für eine 6-eckige Stromsammelschiene,
- Fig. 5: die der Fig. 1 entsprechende Ansicht der Anschlußklemme nach Fig. 4 und
- Fig. 6: eine schematische Draufsicht auf die Anschlußklemme.

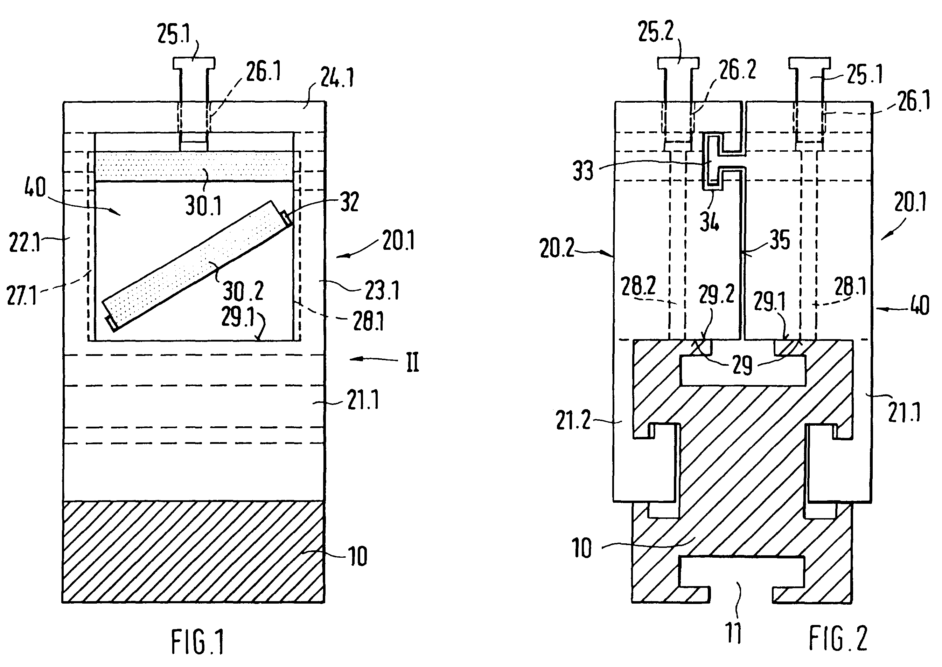

Bei dem Ausführungsbeispiel nach den Fig. 1 und 2 handelt es sich um eine im wesentlichen viereckig Stromsammelschiene 10, bei der in die Außenflächen 29 längsgerichtete, T-förmige Aufnahmenuten 11 eingebracht sind. Die Anschlußklemme wird aus den beiden Klemmenteilen 20.1 und 20.2 zusammengesetzt. Die Klemmenteile 20.1 und 20.2 laufen in hakenförmige Halteelemente 21.1 und 21.2 aus, die in je eine Aufnahmenut 11 eingeführt werden. Die Hakenelemente 21.1 und 21.2 können dabei axial in die Aufnahmenuten 11 eingeschoben werden, wobei gleichzeitig in ihrem Verbindungsbereich 35 über der Stromsammelschiene 10 ein T-Steg in eine T-Nut als Verbindungselemente 33 und 34 die beiden Klemmenteile 20.1 und 20.2 miteinander verbindet.

Haben die Halteelemente 21.1 und 21.2 ein Querspiel in den Aufnahmenuten 11, dann können die Klemmenteile 20.1 und 20.2 auch seitlich eingeführt werden und nach der Verbindung der Klemmenteile 20.1 und 20.2 ist dann die Anschlußklemme unverlierbar an der Stromsammelschiene 10 gehalten.

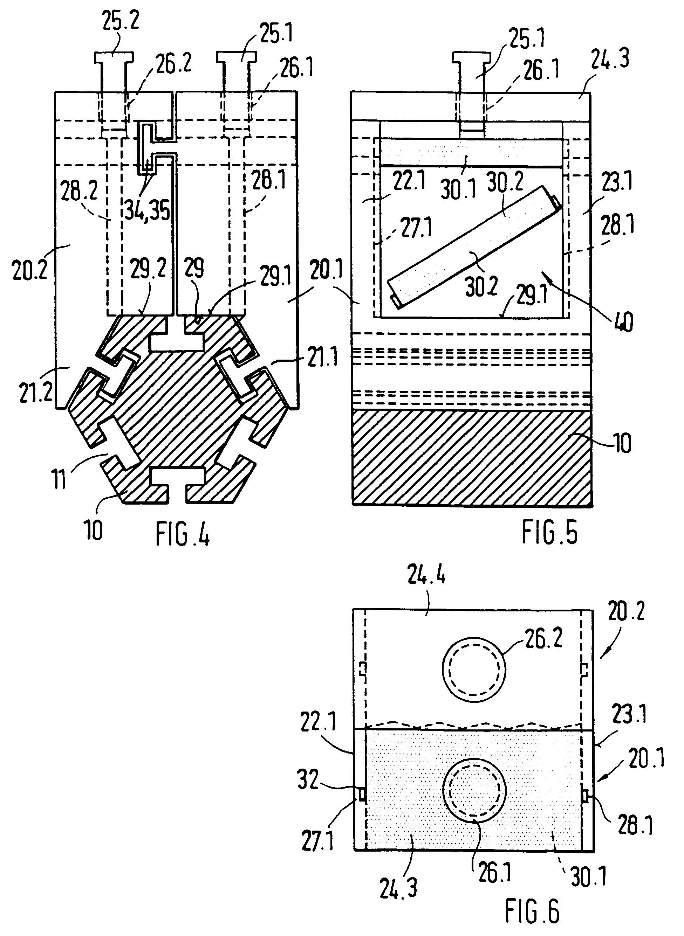

Wie insbesondere der Fig. 2 zu entnehmen ist, bilden die Klemmenteile 20.1 und 20.2 über der für die Verbindung vorgesehenen Außenseite 29 eine geschlossene Klemmenkammer 40, die quer zur Stromsammelschiene 10 verläuft und durch die Schenkel 22.1 und 23.1 sowie den Steg 24.1 bzw. die Schenkel 22.2 und 23.2 sowie den Steg 24.2 begrenzt ist. Die Aussparung in den Klemmenteilen 20.1 und 20.2 ist dabei so, daß die untere Seite 29.1 bzw. 29.2 bei festgezogener Anschlußklemme bündig mit der zugekehrten Außenseite 29 der Stromsammelschiene 10 abschließt. Die Außenseite 29 der Stromsammelschiene 10 kann auch in die Klemmenkammer 40 ragen. In den Stegen 24.1 und 24.2 der Klemmenteile 20.1 und 20.2 ist jeweils eine Gewindebohrung 26.1 bzw. 26.2 für eine Klemmschraube 25.1 bzw. 25.2 eingebracht. Auf den einander zugekehrten Innenseiten der Schenkel 22.1 und 23.1 bzw. 22.2 und 23.2 sind vertikale Führungsnuten 27.1 und 28.1 bzw. 27.2 und 28.2 eingebracht, in die Ansätze 32 von Klemmstücken 30.1 bzw. 30.2 eingeführt werden können, so daß die Klemmstücke in der Klemmkammer 40 in Richtung zur Außenseite 29 der Stromsammelschiene 10 verstellbar gehalten sind. Dabei können sich die Klemmstücke 30.1 bzw. 30.2 über die Tiefe des zugeordneten Klemmenteils 20.1 bzw. 20.2 erstrecken. Es sind jedoch auch Klemmstücke verwendbar, die sich über die gesamte Tiefe der Klemmenkammer 40 erstrecken und in beiden Klemmenteilen 20.1 und 20.2 geführt sind, wie anhand der Fig.6 abzuleiten ist.

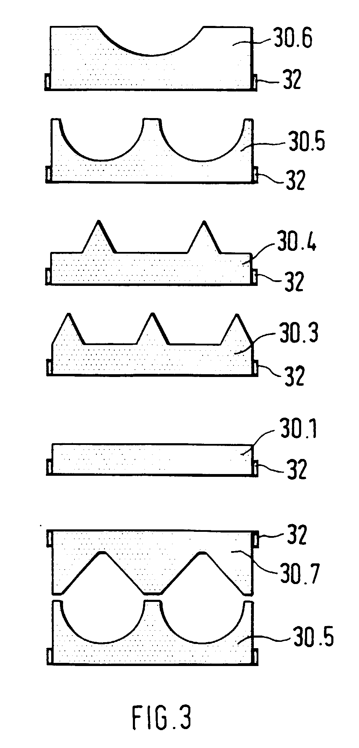

Wie in Fig. 3 gezeigt ist, lassen sich Klemmstücke 30.1 bis 30.7 der unterschiedlichsten Art in die Klemmenkammer 40 einsetzen. Dabei können die Klemmstücke 30.1 lediglich als Klemmplatte ausgebildet sein oder einseitig Ausnehmungen für einen oder mehrere Leiter tragen. Die Querschnitte der Ausnehmungen sind dabei an die Querschnitt der Leiter angepaßt. Die Ansätze 32 sind dabei seitlich so angeformt, daß nach dem Einführen in die Führungsnuten 27.1., 28.1 bzw. 27.2, 28.2 die Klemmstücke 30.1 bis 30.7 ihre richtige Position in der Klemmenkammer 40 einnehmen.

Bei dem Ausführungsbeispiel nach den Fig. 4 und 5 ist eine 6-eckige Stromsammelschiene 10 verwendet. Die Anbringung der Klemmenteile 20.1 und 20.2 ist wie beim Ausführungsbeispiel nach den Fig. 1 und 2, lediglich die Halteelemente 21.1 und 21.2 sind an den neuen Querschnitt der Stromsammelschiene 10 angepaßt. Die Außenseite 29 der Stromsammelschiene 10 kann zur Vergrößerung der Verbindungsfläche auch ohne Aufnahmenut 11 versehen sein. Ist, wie in Fig. 5 angedeutet, der Steg nicht einstückig mit dem Klemmenteil 20.1 bzw. 20.2 verbunden, dann lassen sich bei abgenommenem Steg 24.3 die Klemmstücke 30.1 bis 30.7 leicht in die Klemmenkammer 40 einsetzen. Der Steg 24.3 kann sich dabei auch über beide Klemmenteile 20.1 und 20.2 erstrecken, beide Klemmschrauben 25.1 und 25.2 aufnehmen und gleichzeitig die Verbindung der beiden Klemmenteile 20.1 und 20.2 übernehmen. Dann können die Verbindungselemente 33 und 34 entfallen und die Klemmenteile 20.1 und 20.2 identisch ausgebildet werden.

Die Klemmenteile 20.1 und 20.2 können bei dieser Anschlußklemme auch aus elektrisch leitendem Material hergestellt werden und mit zur elektrischen Verbindung zwischen der Stromsammelschiene 10 und dem bzw. den anzuschließenden bzw. abzweigenden Leiter(n) beitragen.

## Patentansprüche

1. Anschlußklemme für eine Stromsammelschiene eines Stromsammelschienensystems, bei der die Stromsammelschiene einen neckigen Querschnitt (n ≥ 3) aufweist, wobei die Anschlußklemme
aus zwei von beiden Seiten an die Stromsammelschiene (10) anbringbaren und miteinander verbindbaren Klemmenteilen (20.1, 20.2) besteht, die mit Halteelementen (21.1, 21.2) versehen sind und die Klemmenteile (20.1, 20.2) über einer Außenseite (29) der Stromsammelschiene (10) eine quer zu derselben gerichtete Klemmenkammer (40) bilden und wobei in den der Außenseite (29) der Stromsammelschiene (10) abgekehrten Stegen (24.1, 24.2) der Klemmenteile (10,20) Klemmschrauben (25.1, 25.2) angeordnet sind, welche in die Klemmenkammer (40) eingebrachte Klemmstücke (30.1 bis 30.7) an einem in die Klemmenkammer (40) eingeführten Leiter unter Verbindung mit der Außenseite (29) der Stromsammelschiene (10) verspannen, dadurch gekennzeichnet, daß in die Außenseiten der Stromsammelschiene längsgerichtete, hinterschnittene Aufnahmenuten (11) eingebracht sind, daß die halteelementen (21.1, 21.2) in Aufnahmen (11) der Stromsammelschiene (10) einführbar und darin quer zu derselben festlegbar sind, und daß die Klemmschrauben (25.1, 25.2) in den Stegen (24.1, 24.2) verstellbar sind.

2. Anschlußklemme nach Anspruch 1,
dadurch gekennzeichnet,
daß die Aufnahmenuten (11) als T-Nuten ausgebildet sind und daß die Klemmenteile (20.1, 20.2) Halteelemente (21.1, 21.2) tragen, die nur der belegten Außenseite der Stromsammelschiene (10) zugekehrt die T-Nut hintergreifende Halteansätze aufweisen.

3. Anschlußklemme nach Anspruch 1 oder 2,
dadurch gekennzeichnet,
daß die Klemmenteile (20.1, 20.2) im Bereich ihrer Verbindungsebene (35) mittels T-förmiger oder schwalbenschwanzförmiger Verbindungselemente (33,34) miteinander verbindbar sind, wobei die Verbindungsrichtung parallel zur Längsachse der Stromsammelschiene (10) verläuft.

4. Anschlußklemme nach einem der Ansprüche 1 bis 3,
dadurch gekennzeichnet,
daß die Klemmenteile (20.1, 20.2) im wesentlichen spiegelbildlich ausgebildet sind und im Verbindungsbereich (35) lediglich die aufeinander abgestimmten Verbindungselemente (33,34) tragen.

5. Anschlußklemme nach einem der Ansprüche 1 bis 4,
dadurch gekennzeichnet,
daß die Klemmenkammer (40) der Stromsammelschiene (10) zugekehrt bündig mit der Außenseite (29) der Stromsammelschiene (10) abschließende Seiten (29.1, 29.2) aufweist oder daß die Stromsammelschiene (10) mit der Außenseite (29) in die Klemmenkammer (40) ragt.

6. Anschlußklemme nach einem der Ansprüche 1 bis 5,
dadurch gekennzeichnet,
daß die Klemmenkammer (40) durch seitliche Schenkel (22.1, 23.1 bzw. 22.2, 23.2) der Klemmenteile (20.1, 20.2) begrenzt ist, und daß in die einander zugekehrten Innenseiten dieser Schenkel (22.1, 23.1 bzw. 22.2, 23.2) senkrecht zur Außenseite gerichtete Führungsnuten (27.1, 28.1 bzw. 27.2, 28.2) für Führungsansätze (32) der einsetzbaren Klemmstücke (30.1 bis 30.7) eingebracht sind.

7. Anschlußklemme nach Anspruch 1,
dadurch gekennzeichnet,
daß die Stege (24.1, 24.2) der Klemmenteile (20.1. 20.2) als getrennte Teile ausgebildet sind, die mit den Klemmenteilen (20.1, 20.2) verbindbar sind.

8. Anschlußklemme nach Anspruch 7,
dadurch gekennzeichnet,
daß die Stege (24.1, 24.2) beider Klemmenteile (20.1, 20.2) zu einem einzigen Stegteil (24.3) zusammengefaßt sind, das auch die Klemmenteile (20.1, 20.2) miteinander verbindet.

9. Anschlußklemme nach einem der Ansprüche 1 bis 8,
dadurch gekennzeichnet,
daß die in die Klemmenkammer (40) eingesetzten Klemmstücke (30.1 bis 30.7) auf die Breite der Klemmenkammer (40) abgestimmt sind, wobei sie sich in der Tiefe über nur ein Klemmenteil (20.1 oder 20.2) oder über beide Klemmenteile (20.1 und 20.2) erstrecken.

10. Anschlußklemme nach einem der Ansprüche 1 bis 9,
dadurch gekennzeichnet,
daß die Klemmenteile (20.1, 20.2) aus elektrisch leitendem Material bestehen.

11. Anschlußklemme nach einem der Ansprüche 1 bis 10,
dadurch gekennzeichnet,
daß die an der Stromsammelschiene (10) der Klemmenkammer (40) zugekehrte Außenseite (29) geschlossen ist.

12. Anschlußklemme nach einem der Ansprüche 1 bis 11,
dadurch gekennzeichnet,
daß die Klemmstücke (30.2 bis 30.7) mit Ausnehmungen versehen sind, die an den (die) Querschnitt(e) des (der) abzweigenden Leiters (leiter) angepaßt sind.

## Claims

1. Connecting terminal for a bus bar of a bus bar system, wherein the bus bar has an n-polygonal cross-section (n ≥ 3), the connecting terminal comprising two terminal members (20.1, 20.2) which are attachable to the bus bar (10) from both sides and interconnectable, said terminal members being provided with retaining members (21.1, 21.2), and the terminal members (20.1, 20.2) forming, above an external surface (29) of the bus bar (10), a terminal chamber (40) orientated transversely relative thereto, and clamping screws (25.1, 25.2) being disposed in the webs (24.1, 24.2) of the terminal members (20.1, 20.2) remote from the external surface (29) of the bus bar (10), which clamping screws tightly engage clamping portions (30.1 to 30.7), which are introduced into the terminal chamber (40), on a conductor inserted into the terminal chamber (40) by a connection with the external surface (29) of the bus bar (10), characterised in that longitudinally orientated, undercut receiving grooves (11) are introduced into the external surfaces of the bus bar, in that the retaining members (21.1, 21.2) are insertable into receiving means (11) of the bus bar (10) and are securable therein transversely relative thereto, and in that the clamping screws (25.1, 25.2) are displaceable in the webs (24.1, 24.2).

2. Connecting terminal according to claim 1, characterised in that the receiving grooves (11) are configured as T-shaped grooves, and in that the terminal members (20.1, 20.2) carry retaining members (21.1, 21.2) which have retaining extensions which only engage behind the T-shaped groove when facing the engaged external surface of the bus bar (10).

3. Connecting terminal according to claim 1 or 2, characterised in that the terminal members (20.1, 20.2) are interconnectable in the region of their connecting plane (35) by means of T-shaped or dovetailed connecting members (33, 34), the direction of connection extending parallel to the longitudinal axis of the bus bar (10).

4. Connecting terminal according to one of claims 1 to 3, characterised in that the terminal members (20.1, 20.2) have a substantially mirror-inverted configuration and only carry, in the connecting region (35), the connecting members (33, 34) adapted to each other.

5. Connecting terminal according to one of claims 1 to 4, characterised in that the terminal chamber (40) has sides (29.1, 29.2) terminating flush with the external surface (29) of the bus bar (10) when facing the bus bar (10), or in that the bus bar (10) protrudes into the terminal chamber (40) with the external surface (29).

6. Connecting terminal according to one of claims 1 to 5, characterised in that the terminal chamber (40) is defined by lateral portions (22.1, 23.1 or 22.2, 23.2 respectively) of the terminal members (20.1, 20.2), and in that guide grooves (27.1, 28.1 or 27.2, 28.2 respectively), which are orientated perpendicularly relative to the external surface, are introduced into the internal surfaces, which face one another, of these portions (22.1, 23.1 or 22.2, 23.2 respectively) for guiding guide extensions (32) of the insertable clamping portions (30.1 to 30.7).

7. Connecting terminal according to claim 1, characterised in that the webs (24.1, 24.2) of the terminal members (20.1, 20.2) are configured as separate parts which are connectable to the terminal members (20.1, 20.2).

8. Connecting terminal according to claim 7, characterised in that the webs (24.1, 24.2) of both terminal members (20.1, 20.2) are combined to form a single web member (24.3) which also interconnects the terminal members (20.1, 20.2).

9. Connecting terminal according to one of claims 1 to 8, characterised in that the clamping portions (30.1 to 30.7), which are inserted into the terminal chamber (40), are adapted to the width of the terminal chamber (40), since they extend, in respect of the depth, over only one terminal member (20.1 or 20.2) or over both terminal members (20.1 and 20.2).

10. Connecting terminal according to one of claims 1 to 9, characterised in that the terminal members (20.1, 20.2) are formed from electrically conductive material.

11. Connecting terminal according to one of claims 1 to 10, characterised in that the external surface (29), facing the terminal chamber (40) on the bus bar (10), is closed.

12. Connecting terminal according to one of claims 1 to 11, characterised in that the clamping portions (30.2 to 30.7) are provided with recesses, which are adapted to the cross-section(s) of the branching-off conductor(s).

## Revendications

1. Borne pour une barre omnibus d'un jeu de barres omnibus, où la barre omnibus présente une section transversale à n angles (n > 3), où la borne est constituée d'éléments de borne (20.1, 20.2) pouvant être montés des deux côtés de la borne omnibus (10) et pouvant être connectés l'un à l'autre, éléments de borne qui sont dotés d'éléments de fixation (21.1, 21.2) et où les éléments de borne (20.1, 20.2) constituent sur une face extérieure (29) de la barre omnibus (10) une chambre de borne (40) orientée transversalement à cette barre omnibus, et où dans les nervures (24.1, 24.2) des éléments de borne (20.1, 20.2) qui ne sont pas orientées vers la barre omnibus (10) sont disposées des vis de serrage (25.1, 25.2), lesquelles viennent serrer sous contrainte des pièces de serrage (30.1 à 30.7) introduites dans la chambre de borne (40) un conducteur introduit dans la chambre de borne (40), avec connexion avec la face extérieure (29) de la barre omnibus (10),
caractérisée
en ce que dans les faces extérieures de la barre omnibus sont pratiquées des rainures de réception en dépouille de direction longitudinale (11).

2. Borne suivant la revendication 1,
caractérisée
en ce que les rainures de réception (11) ont la forme de rainures en T et en ce que les éléments de borne (20.1, 20.2) portent des éléments de fixation (21.1, 21.2) qui présentent des épaulements de fixation uniquement en direction du côté extérieur connecté de la barre omnibus (10), épaulements de fixation s'engageant derrière la rainure.

3. Borne suivant la revendication 1 ou 2,
caractérisée
en ce que dans la région de leur plan de jonction (35), les éléments de borne (20.1, 20.2) peuvent être reliés mutuellement au moyen d'éléments de jonction (33, 34) en forme de T ou en forme de queue d'aronde, la direction de jonction étant parallèle à la direction longitudinale de la barre omnibus (10).

4. Borne suivant l'une quelconque des revendications de 1 à 3,
caractérisée
en ce que les éléments de borne (20.1, 20.2) sont en substance énantiomorphes et dans la région de liaison (35) portent uniquement les éléments de jonction (33,34) mutuellement harmonisés.

5. Borne suivant l'une quelconque des revendications de 1 à 4,
caractérisée
en ce que en regard de la barre omnibus (10), la chambre de borne (40) présente des faces (29.1, 29.2) se terminant à fleur du côté extérieur (29) de la barre omnibus, ou en ce que la barre omnibus (10) pénètre par son côté extérieur (29) dans la chambre de borne (40).

6. Borne suivant l'une quelconque des revendications de 1 à 5,
caractérisée
en ce que la chambre de borne (40) est limitée par des ailes latérales (22.1, 23.1 ou 22.2, 23.2) des éléments de borne (20.1, 20.2), et
en ce que dans les faces intérieures orientées l'une vers l'autre de ces ailes (22.1, 23.1 ou 22.2, 23.2) sont pratiquées des rainures de guidage (27.1, 28.1 ou 27.2, 28.2) orientées perpendiculairement au côté extérieur, pour des épaulements de guidage (32) des pièces de serrage (30.1 à 30.7) qui peuvent être mises en place.

7. Borne suivant la revendication 1,
caractérisée
en ce que les nervures (24.1, 24.2) des éléments de borne (20.1, 20.2) ont la forme de pièces séparées, qui peuvent être reliées aux éléments de borne (20.1, 20.2).

8. Borne suivant la revendication 7,
caractérisée
en ce que les nervures (24.1, 24.2) des deux éléments de borne (20.1, 20.2) sont réunies en un seul élément de nervure (24.3), lequel relie également l'un à l'autre les éléments de borne (20.1, 20.2).

9. Borne suivant l'une quelconque des revendications de 1 à 8,
caractérisée
en ce que les pièces de serrage (30.1 à 30.7) placées dans la chambre de borne (40) sont harmonisées avec la largeur de la chambre de borne (40), où dans le sens de la profondeur elles ne s'étendent qu'au-dessus un seul élément de borne (20.1 ou 20.2) ou aussi au-dessus des deux éléments de borne (20.1 et 20.2).

10. Borne suivant l'une quelconque des revendications de 1 à 9,
caractérisée
en ce que les éléments de borne (20.1, 20.2) sont constitués par un matériau conducteur électrique.

11. Borne suivant l'une quelconque des revendications de 1 à 10,
caractérisée
en ce que le côté extérieur (29) tourné vers la barre omnibus (10) de la chambre de borne (40) est fermé.

12. Borne suivant l'une quelconque des revendications de 1 à 11,
caractérisée
en ce que les pièces de serrage (30.2 à 30.7) présentent des évidements, qui sont harmonisés avec la section transversale ou les sections transversales du conducteur ou des conducteurs branchés.
